# EUROPEAN PATENT APPLICATION

(11) **EP 3 910 963 A1**
(43) Date of publication of application: **17.11.2021**
(21) Application number: 19909235.4
(22) Date of filing: 24.12.2019
(51) Int. Cl.: H04R 1/10, H04R 1/40, H04R 3/00, H04R 3/04

(54) **HEADPHONES, ACOUSTIC SIGNAL PROCESSING METHOD, AND PROGRAM**

(30) Priority: 10.01.2019 JP 2019002439
(71) Applicant: Sony Group Corporation, 108-0075 Tokyo (JP)
(72) Inventor: OSHIMA, Kyosuke, Tokyo 141-8610 (JP)
(74) Representative: 2SPL Patentanwälte PartG mbB
(86) International application number: PCT/JP2019/050493
(87) International publication number: WO 2020/145122

(57) **Abstract**

The present invention achieves a headphone that enables mode control for shifting to a conversation mode in which an external sound is output from a speaker without a need to perform troublesome user operation. The headphone includes: a microphone that captures an external sound which is an ambient sound around the headphone; and a mode control unit that controls an output sound of a speaker of the headphone according to a mode. The mode control unit shifts to a conversation mode in which the external sound is output from the speaker, when detecting utterance of a user wearing the headphone by analysis of an input sound of the microphone. Further, the mode control unit also shifts to the conversation mode, when detecting a touch operation of a prescribed touch type by analysis of an output of a touch sensor array that is capable of identifying the type of a touch operation on an external surface of the headphone.

## Description

### TECHNICAL FIELD

The present disclosure relates to a headphone, an acoustic signal processing method, and a program. More specifically, the present invention relates to a headphone capable of enabling mode change for outputting external sound from a speaker of the headphone according to a user's utterance, an acoustic signal processing method, and a program.

### BACKGROUND ART

Recently, headphones equipped with an external sound capturing function are widely used. That is, such widely-used headphones have a function of, when a user listens to music with headphones, outputting external sound captured by a microphone to a speaker of the headphones together with the music without completely blocking the external sound (ambient sound). For example, Patent Document 1 (Japanese Patent Application Laid-Open No. 2009-021826) describes headphones having an external sound capturing function.

The abovementioned Patent Document 1 discloses a configuration in which a mode for capturing external sound and a mode for not capturing external sound are switched by a switching operation by a user.

However, the configuration described in the above Patent Document 1 has a problem that, when switching to the mode for capturing external sound, the user needs to fumble for a switch and perform the switching operation, which is troublesome.

### CITATION LIST

### PATENT DOCUMENT

Patent Document 1: Japanese Patent Application Laid-Open No. 2009-021826

### SUMMARY OF THE INVENTION

### PROBLEMS TO BE SOLVED BY THE INVENTION

The present disclosure has been made in view of the above problems, for example, and provides: a headphone capable of switching to an external sound capturing mode at an optimum timing without generating a burden on a user such as fumbling for a switch; an acoustic signal processing method; and a program.

An embodiment of the present disclosure provides: a headphone that immediately switches to an external sound capturing mode in response to a user's utterance; an acoustic signal processing method; and a program.

### SOLUTIONS TO PROBLEMS

A first aspect of the present disclosure provides a headphone including:
a microphone that captures an external sound which is an ambient sound around the headphone; and
a mode control unit that controls an output sound of a speaker of the headphone according to a mode,
in which the mode control unit executes mode control for shifting to a conversation mode in which the external sound captured by the microphone is output from the speaker, when detecting utterance of a user wearing the headphone by analysis of an input sound of the microphone.

In addition, a second aspect of the present disclosure provides an acoustic signal processing method for executing control of a speaker output sound of a headphone,
the headphone including:
a microphone that captures an external sound which is an ambient sound around the headphone; and
a mode control unit that controls an output sound of a speaker of the headphone according to a mode,
in which the mode control unit executes mode control for shifting to a conversation mode in which the external sound captured by the microphone is output from the speaker, when detecting utterance of a user wearing the headphone by analysis of an input sound of the microphone.

In addition, a third aspect of the present disclosure provides a program that causes a headphone to execute control of a speaker output sound,
the headphone including:
a microphone that captures an external sound which is an ambient sound around the headphone; and
a mode control unit that controls an output sound of a speaker of the headphone according to a mode,
the program causing the mode control unit to execute mode control for shifting to a conversation mode in which the external sound captured by the microphone is output from the speaker, when the mode control unit detects utterance of a user wearing the headphone by analysis of an input sound of the microphone.

Note that the program of the present disclosure is, for example, a program that can be provided to an information processing device or a computer system capable of executing various program codes by a storage medium or a communication medium that provides the program codes in a computer-readable format. By providing such a program in a computer-readable format, processing according to the program can be performed in the information processing device or computer system.

Other objects, features, and advantages of the present disclosure will become apparent from the detailed description based on the embodiment of the present disclosure described later and the accompanying drawings. It is to be noted that the system in the present specification refers to a logical set of multiple devices, and the respective devices are not limited to be housed within a single housing.

### EFFECTS OF THE INVENTION

According to the configuration of one embodiment of the present disclosure, a headphone capable of mode control for shifting to a conversation mode in which an external sound is output from a speaker without a need to perform troublesome user operation is achieved.

Specifically, for example, the headphone includes: a microphone that captures an external sound which is an ambient sound around the headphone; and a mode control unit that controls an output sound of a speaker of the headphone according to a mode. The mode control unit shifts to a conversation mode in which the external sound is output from the speaker, when detecting utterance of a user wearing the headphone by analysis of an input sound of the microphone. Further, the mode control unit also shifts to the conversation mode, when detecting a touch operation of a prescribed touch type by analysis of an output of a touch sensor array that is capable of identifying the type of a touch operation on an external surface of the headphone.

With this configuration, a headphone that enables mode control for shifting to the conversation mode in which an external sound is output from a speaker without a need to perform troublesome user operation is achieved.

It should be noted that the effects described in the present specification are merely illustrative and not restrictive, and may have additional effects.

### BRIEF DESCRIPTION OF DRAWINGS

Fig. 1 is a diagram for describing a configuration example of headphones according to the present disclosure.
Fig. 2 is a diagram for describing in detail the configuration example of the headphones.
Fig. 3 is a diagram for describing a touch sensor array provided in the headphones.
Fig. 4 is a diagram for describing mode shift executed in the headphones according to the present disclosure.
Fig. 5 is a diagram for describing the configuration example of the headphones according to the present disclosure.
Fig. 6 is a flowchart for describing a processing sequence executed by a mode control unit of the headphones.
Fig. 7 is a flowchart for describing a processing sequence executed by the mode control unit of the headphones.
Fig. 8 is a diagram for describing mode shift executed by the mode control unit of the headphones.
Fig. 9 is a diagram for describing mode shift executed by the mode control unit of the headphones.
Fig. 10 is a diagram for describing a configuration example of hardware of the headphones according to the present disclosure.

### MODE FOR CARRYING OUT THE INVENTION

Headphones, an acoustic signal processing method, and a program according to the present disclosure will be described below in detail with reference to the drawings. Note that the description will be given in the following order.
1. Overview of headphones according to present disclosure
2. Mode shift executed in headphones according to present disclosure
2-1. Mode shift between (a) normal mode and (c) emergency mode
2-2. Mode shift between (a) normal mode and (b) conversation mode
2-3. Mode shift between (b) conversation mode and (c) emergency mode
3. Configuration example of headphones
4. Processing sequence executed by mode control unit of headphones
4-1. (Processing example 1) Processing example of shifting to conversation mode by detecting utterance of user during normal mode
4-2. (Processing example 2) Processing example in which mode shift is performed by receiving sensor detection information from touch sensor array in normal mode
5. Summary of mode shifts executed by mode control unit
5-1. Mode shift in a case where current mode is normal mode
5-2. Mode shift in a case where current mode is emergency mode
5-3. Mode shift in a case where current mode is first conversation mode (for low ambient sound level)
5-4. Mode shift in a case where current mode is second conversation mode (for high ambient sound level) 6. Configuration example of hardware of headphones
7. Summary of configuration of present disclosure

### [1. Overview of headphones according to present disclosure]

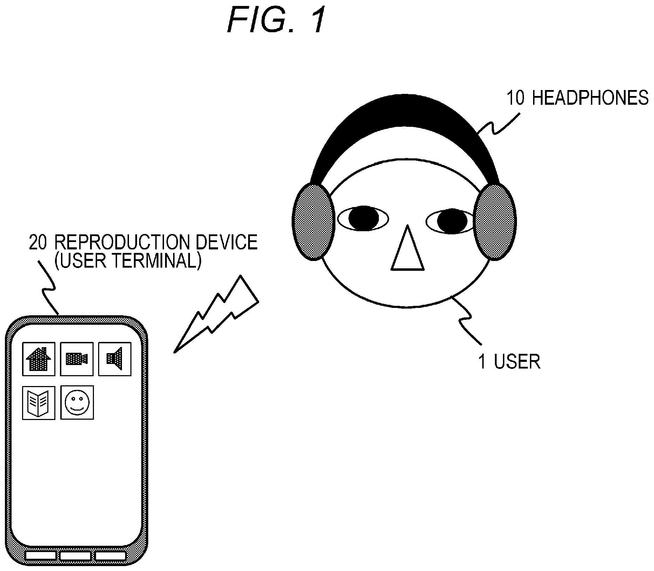

First, the overview of the headphones according to the present disclosure will be described with reference to Fig. 1 and the subsequent drawings. Fig. 1 shows a user 1 wearing headphones 10 and a reproduction device (user terminal) 20 owned by the user 1.

The reproduced sound, for example, music data, reproduced in the reproduction device (user terminal) 20 is transmitted to the headphones 10 by wireless communication, and the music reproduction sound is output from left and right (LR) speakers of the headphones.

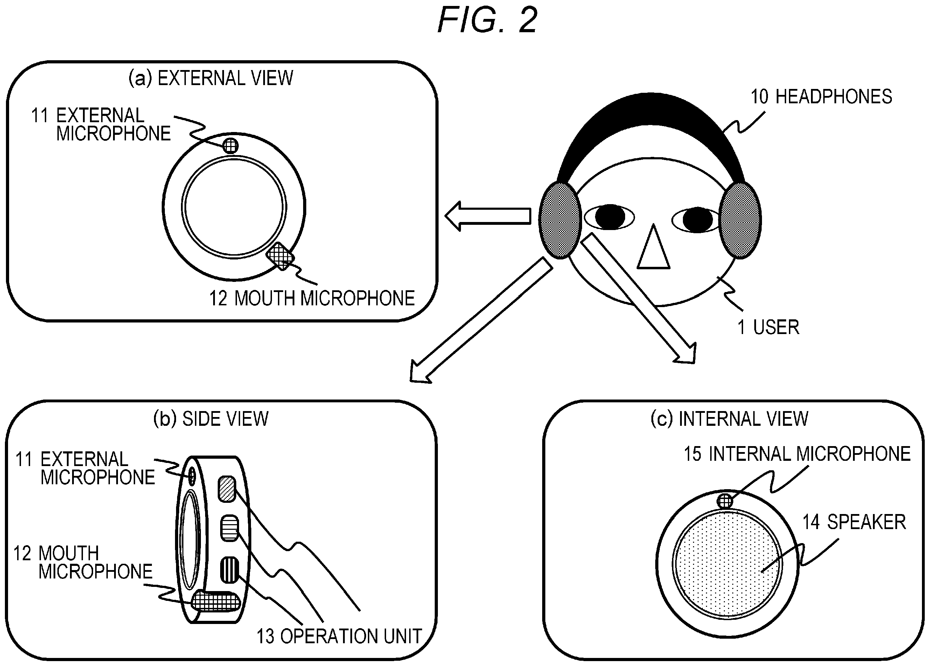

Fig. 2 shows a detailed configuration example of the headphones 10. Fig. 2 shows (a) an external view, (b) a side view, and (c) an internal view of the headphones 10.

The (a) external view shows an external surface that does not touch the ear of the user 1. As shown in Fig. 2(a), the external surface of the headphones is provided with an external microphone 11 and a mouth microphone 12. The external microphone 11 is a microphone that captures external sound (ambient sound).

The mouth microphone 12 is provided mainly for the purpose of acquiring the utterance sound of the user 1. The mouth microphone 12 is installed near the mouth of the user 1. Note that the external sound (ambient sound) is also captured by the mouth microphone 12.

Further, as shown in (b) side view, an operation unit 13 which can be operated by the user and which includes switches, buttons, etc. is provided on the side surface of the headphones.

The operation unit 13 is used in a case where the user performs various operations such as start, stop, skip, volume adjustment, and mute of the reproduced music.

Further, as shown in (b) side view, the mouth microphone 12 is provided from the external surface to the side surface of the headphones, and is set to efficiently capture the utterance of the user 1. Note that the mouth microphone 12 may be installed only on the external surface of the headphones.

Fig. 2(c) which is the internal view shows a portion that comes into contact with the ear of the user 1. As shown in Fig. 2(c), a speaker 14 is provided on the internal surface of the headphones. The speaker 14 is used not only for outputting a reproduced sound but also for outputting a sound captured by the microphone.

As shown in Fig. 2(c), an internal microphone 15 is also provided on the internal surface of the headphones. The internal microphone 15 is also a microphone for capturing external sound.

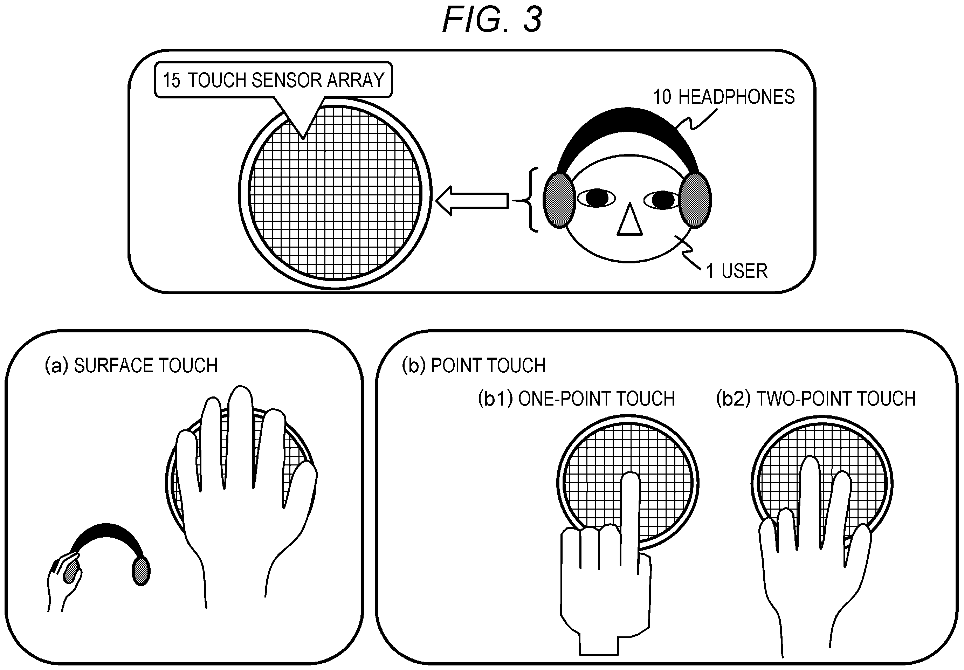

Next, a touch sensor array 15 provided in the headphones 10 will be described with reference to Fig. 3. As shown in Fig. 3, the headphones 10 have a built-in touch sensor array 15.

The touch sensor array 15 has an array of a large number of small touch sensors, and each touch sensor outputs a detection value individually. That is, it detects that the user touches the external surface of the headphones. Further, it is possible to determine the way the user touches the external surface of the headphones by his/her hand, that is, the type of touch, by analyzing the outputs of a large number of touch sensors constituting the touch sensor array 15.

For example, in a case where the user's hand touches the entire external surface of the headphones 10 as shown in Fig. 3(a), such touch is detected as a surface touch.

Further, in a case where the user's fingers touch a part of the external surface of the headphones 10 as shown in Fig. 3(b), such touch is detected as a point touch.

In addition, as shown in Figs. 3(b1) and 3(b2), in a case where one finger of the user touches one point on the external surface of the headphones 10, such touch is detected as a one-point touch, and in a case where the two fingers of the user touch two points that are separated from each other, such touch is detected as a two-point touch.

The type of touches can be determined by analyzing outputs of a large number of touch sensors constituting the touch sensor array 15.

### [2. Mode shift executed in headphones according to present disclosure]

Next, mode shifts executed in the headphones according to the present disclosure will be described.

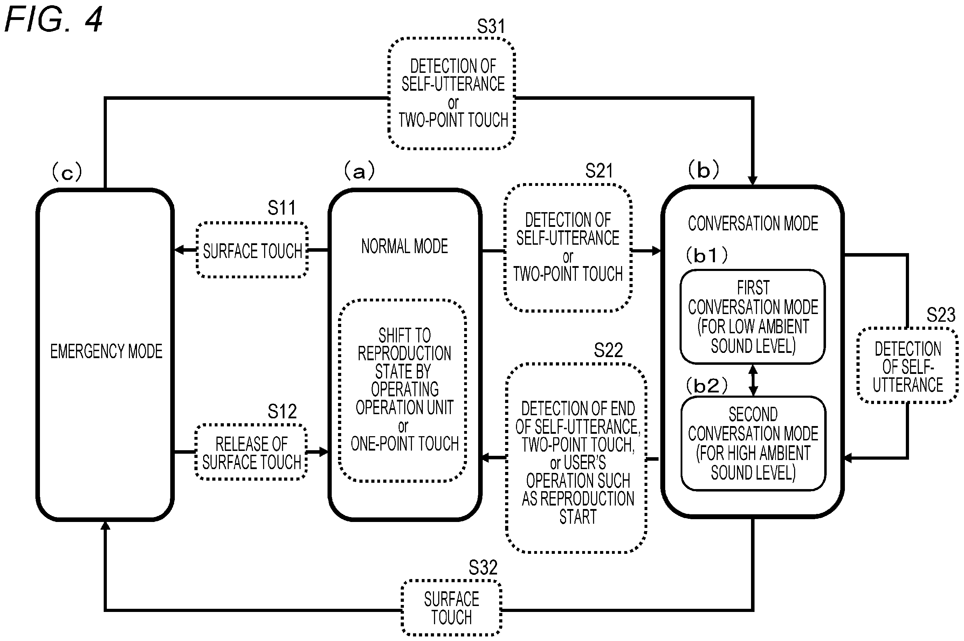

Fig. 4 is a diagram for describing a mode shift executed in the headphones 10 according to the present disclosure.

As shown in Fig. 4, the headphones 10 according to the present disclosure have the following three modes.
(a) Normal mode
(b) Conversation mode
(c) Emergency mode

(a) Normal mode is a mode for listening to music reproduced by the reproduction device. In the normal mode, capture of external sound by the microphones and an output of external sound from the speaker are stopped. Alternatively, external sound is captured by the microphones, but external sound output from the speaker is limited to a given level or lower. Note that the output level of external sound in the normal mode can be set by the user.

Further, in (a) normal mode, the user can perform various operations such as reproduction control of music reproduction, for example, reproduction start, stop, skip, volume adjustment, mute, etc. by operating the operation unit 14.

In addition, processing such as reproduction start, stop, skip, or the like by the one-point touch described above with reference to Fig. 3(b1) can also be performed.

(b) Conversation mode is a mode shifted from (a) normal mode in a case where, for example, the user wearing the headphones 10 speaks.

A mode control unit inside the headphones 10 shifts to (b) conversation mode from (a) normal mode when determining that the user 1 wearing the headphones 10 speaks by analysis of sounds acquired by a plurality of microphones (external microphone 11, mouth microphone 12, internal microphone 15) provided to the headphones 10.

In (b) conversation mode, external sound is captured by the microphones and external sound is output from the speaker along with the music reproduced by the reproduction device. The output level of external sound from the speaker is raised to a level at which the user 1 can sufficiently recognize the external sound. That is, it is set to a level at which normal conversation is possible. Note that, in the conversation mode, external sound may be captured by the microphones and may be output from the speaker with the reproduced music muted or stopped in order to specialize in conversation.

Note that there are two types of conversation modes in (b) conversation mode. That is, there are the following two illustrated modes.
(b1) First conversation mode (for low ambient sound level)
(b2) Second conversation mode (for high ambient sound level)

(b1) First conversation mode (for low ambient sound level) is a mode which is set in a case where the ambient sound level is not more than a threshold value (for example, 80 dBA) and the environment is relatively quiet. In the first conversation mode (for low ambient sound level), the external sound (ambient sound) is output from the speaker together with the reproduced music or with the reproduced music being stopped or muted.

Note that there are two types of external sound output modes in (b1) first conversation mode (for low ambient sound level): an ambient sound mode-normal (ASM normal) mode and a voice mode.

In the ASM normal mode, sounds acquired by a plurality of microphones (external microphone 11, mouth microphone 12, internal microphone 15) mounted to the headphones 10 are output without change through the speaker 14.

In the voice mode, signal processing for extracting and emphasizing a sound signal near the frequency of a human voice from the sounds acquired by the microphones (external microphone 11, mouth microphone 12, internal microphone 15) is executed, and the processed signal is output through the speaker 14.

Which mode is used for outputting external sound can be set by the user in advance, and can be changed as required.

On the other hand, (b2) second conversation mode (for high ambient sound level) is a mode which is set in a case where the ambient sound level exceeds the threshold value (for example, 80 dBA) and the environment is relatively noisy. In the second conversation mode, the external sound (ambient sound) is also output from the speaker together with the reproduced music or with the reproduced music being stopped or muted, as in the first conversation mode.

Note that there are three types of external sound output modes in (b2) second conversation mode (for high ambient sound level): a voice mode, a beamforming mode, and a voice + beamforming mode.

In the voice mode, signal processing for extracting and emphasizing a sound signal near the frequency of a human voice from the sounds acquired by the microphones (external microphone 11, mouth microphone 12, internal microphone 15) is executed, and the processed signal is output through the speaker 14.

In the beamforming mode, signal processing for selecting and emphasizing the sound from front of the user 1 wearing the headphones 10 is executed, and the processed signal is output through the speaker 14.

In the voice + beamforming mode, both the signal processing in the voice mode and the signal processing in the beamforming mode are executed, and the processed signal is output through the speaker 14.

Which mode is used for outputting external sound can be set by the user in advance, and can be changed as required.

The mode shift between (b1) first conversation mode (for low ambient sound level) and (b2) second conversation mode (for high ambient sound level) is executed by determining, by the mode control unit inside the headphones 10, the level of the external sound (ambient sound) on the basis of the sound acquired by the microphones. The specific processing sequence will be described later with reference to flowcharts.

(c) Emergency mode is a mode that can be shifted in a case where the user 1 wearing the headphones 10 wants to hear an external sound regardless of whether or not the user speaks.

The mode shift to (c) emergency mode can be executed when the user 1 performs surface touch on the external surface of the headphones 10 in (b) normal mode.

In (c) emergency mode, external sound is captured by the microphones and is output from the speaker along with the reproduction sound such as music reproduced by the reproduction device. The output level of external sound from the speaker is raised to a level at which the user 1 can sufficiently recognize the external sound.

As described above, the headphones according to the present disclosure have the following three modes.
(a) Normal mode
(b) Conversation mode
(c) Emergency mode

The headphones have these three modes.

Furthermore, (b) conversation mode has the following two types of conversation modes.
(b1) First conversation mode (for low ambient sound level)
(b2) Second conversation mode (for high ambient sound level)
(b) Conversation mode has the above two modes.

Each of these modes is switched by the mode control unit inside the headphones 10 depending on the user's operation on the operation unit 13, the user touch on the external surface of the headphones (surface touch, one-point touch, two-point touch, etc.), the presence or absence of user utterance, or the like.

In a mode shift diagram of Fig. 4, switching conditions for each mode are indicated by a plurality of dotted frames.

These mode switching conditions will be described below.

### [2-1. Mode shift between (a) normal mode and (c) emergency mode]

First, the mode shift between (a) normal mode and (c) emergency mode will be described.

### (S11)

The shift from (a) normal mode to (c) emergency mode is executed in a case where a surface touch by the user is detected. As described with reference to Fig. 3(a), in a case where it is detected on the basis of the analysis of output of the touch sensor array 15 that the user touches almost the entire external surface of the headphones, the mode control unit executes the mode shift from (a) normal mode to (c) emergency mode.

### (S12)

On the other hand, the shift from (c) emergency mode to (a) normal mode is executed in a case where the release of the surface touch by the user is detected. In a case where it is detected on the basis of the analysis of output of the touch sensor array 15 that the user stops the surface touch in which the user touches almost the entire external surface of the headphones, the mode control unit executes the mode shift from (c) emergency mode to (a) normal mode.

### [2-2. Mode shift between (a) normal mode and (b) conversation mode]

Next, the mode shift between (a) normal mode and (b) conversation mode will be described.

### (S21)

The shift from (a) normal mode to (b) conversation mode is executed in a case where any of the following events is detected.
(1) Detection of self-utterance
(2) Two-point touch

(1) The mode shift by detection of self-utterance is a process of shifting from (a) normal mode to (b) conversation mode in a case where utterance by the user 1 wearing headphones 10 is detected.

The mode control unit inside the headphones 10 determines whether or not the user 1 wearing the headphones 10 speaks by analyzing sounds acquired by a plurality of microphones (external microphone 11, mouth microphone 12, internal microphone 15) provided to the headphones 10.

For example, a sound source position is specified by analyzing the sounds acquired by a plurality of microphones (external microphone 11, mouth microphone 12, internal microphone 15), and in a case where the sound source position is the mouth of the user wearing the headphones, it is determined that the user has spoken, and the shift from (a) normal mode to (b) conversation mode is executed.

(2) The mode shift by the two-point touch is a process of shifting from (a) normal mode to (b) conversation mode in a case where the two-point touch on the external surface of the headphones 10 is detected.

As described with reference to Fig. 3(b2), in a case where it is detected on the basis of the analysis of output of the touch sensor array 15 that the user touches two separated partial areas of the external surface of the headphones, the mode control unit executes the process of shifting to (b) conversation mode from (a) normal mode.

### (S22)

On the other hand, the shift from (b) conversation mode to (a) normal mode is executed in a case where any of the following events is detected.
(1) Detection of end of self-utterance
(2) Two-point touch
(3) User's operation such as reproduction start

(1) The mode shift by detecting the end of self-utterance is a process of shifting from (b) conversation mode to (a) normal mode in a case where utterance by the user 1 wearing the headphones 10 is not detected for a certain period of time.

As described above, the mode control unit inside the headphones 10 determines whether or not the user 1 wearing the headphones 10 speaks by analyzing sounds acquired by a plurality of microphones (external microphone 11, mouth microphone 12, internal microphone 15) provided to the headphones 10.

In a case where the utterance of the user is not detected for a prescribed threshold time (for example, 30 seconds) or more after shift to (b) conversation mode, the mode control unit of the headphones 10 shifts to (a) normal mode from (b) conversation mode. The threshold time can be changed to various times by the user.

Note that, in a case where the utterance by the user 1 wearing the headphones 10 is detected at intervals less than the threshold time after the shift to (b) conversation mode as shown in (S23) of Fig. 4, the conversation mode continues.

The process of shifting from (b) conversation mode to (a) normal mode is executed only in a case where the utterance of the user is not detected for the prescribed threshold time or more.

(2) The mode shift by the two-point touch is a process of shifting from (b) conversation mode to (a) normal mode in a case where the two-point touch on the external surface of the headphones 10 is detected.

In a case where it is detected on the basis of the analysis of output of the touch sensor array 15 that the user touches two separated partial areas of the external surface of the headphones while (b) conversation mode is set, the mode control unit executes the process of shifting to (a) normal mode from (b) conversation mode.

(3) The mode shift by the user's operation such as reproduction start is a process of shifting to (a) normal mode from (b) conversation mode in a case where the user's operation on the operation unit 13 of the headphones 10, for example, the operation such as reproduction start, is detected.

The mode control unit executes the process of shifting to (a) normal mode from (b) conversation mode in a case where the user's operation on the operation unit 13 of the headphones 10, for example, the operation such as reproduction start, is detected.

### [2-3. Mode shift between (b) conversation mode and (c) emergency mode]

Next, the mode shift between (b) conversation mode and (c) emergency mode will be described.

### (S31)

The shift from (c) emergency mode to (b) conversation mode is executed in a case where any of the following events is detected.
(1) Detection of self-utterance
(2) Two-point touch

(1) The mode shift by detection of self-utterance is a process of shifting to (b) conversation mode from (c) emergency mode in a case where utterance by the user 1 wearing the headphones 10 is detected while the emergency mode is set.

As described above, the mode control unit inside the headphones 10 determines whether or not the user 1 wearing the headphones 10 speaks by analyzing sounds acquired by a plurality of microphones (external microphone 11, mouth microphone 12, internal microphone 15) provided to the headphones 10.

For example, a sound source position is specified by analyzing the sounds acquired by a plurality of microphones (external microphone 11, mouth microphone 12, internal microphone 15), and in a case where the sound source position is the mouth of the user wearing the headphones, it is determined that the user has spoken, and the shift from (c) emergency mode to (b) conversation mode is executed.

(2) The mode shift by the two-point touch is a process of shifting to (b) conversation mode from (c) emergency mode in a case where the two-point touch on the external surface of the headphones 10 is detected while the emergency mode is set.

As described with reference to Fig. 3(b2), in a case where it is detected on the basis of the analysis of output of the touch sensor array 15 that the user touches two separated partial areas of the external surface of the headphones, the mode control unit executes the process of shifting to (b) conversation mode from (c) emergency mode.

### (S32)

On the other hand, the shift from (b) conversation mode to (c) emergency mode is performed in a case where a surface touch by the user is detected.

In a case where it is detected on the basis of the analysis of output of the touch sensor array 15 that the user touches almost the entire external surface of the headphones as described with reference to Fig. 3(a) while (b) conversation mode is set, the mode control unit executes the process of shifting to (b) conversation mode from (c) emergency mode.

### [3. Configuration example of headphones]

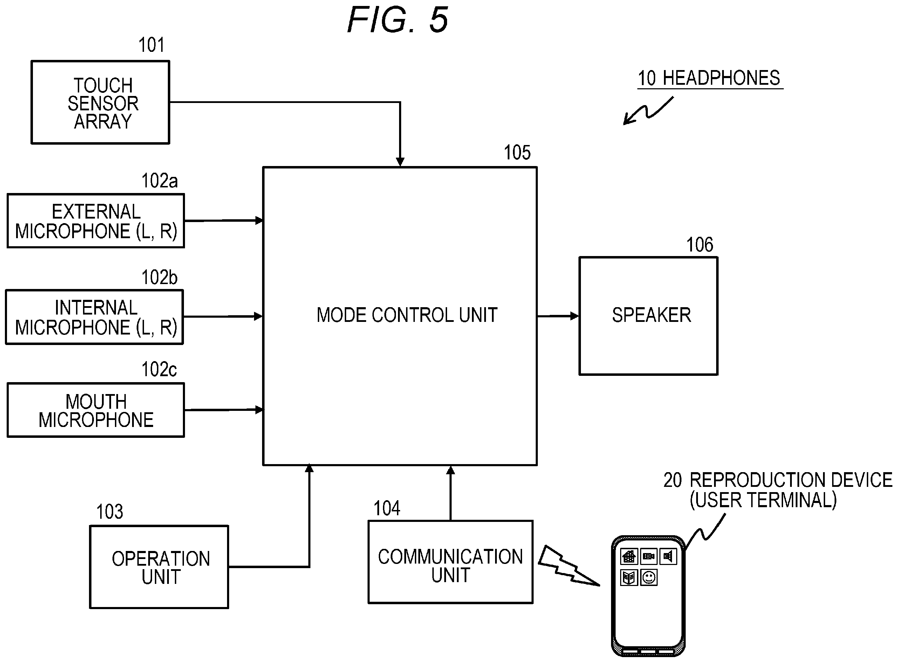

Next, a configuration example of the headphones 10 according to the present disclosure will be described with reference to Fig. 5.

Fig. 5 is a block diagram showing the configuration example of the headphones 10 according to the present disclosure.

As shown in Fig. 5, the headphones 10 includes a touch sensor array 101, an external microphone 102a, an internal microphone 102b, a mouth microphone 102c, an operation unit 103, a communication unit 104, a mode control unit 105, and a speaker 106.

The touch sensor array 101 corresponds to the touch sensor array 15 previously described with reference to Fig. 3.

As previously described with reference to Fig. 3, the touch sensor array 101 has an array of a large number of small touch sensors, and each touch sensor outputs a detection value individually. That is, it is detected that the user touches the external surface of the headphones, and further, it is possible to identify the way the user touches the external surface of the headphones by his/her hand, that is, the type of touch, by analyzing the outputs of a large number of touch sensors constituting the touch sensor array 101.

The touch sensor array 101 outputs, to the mode control unit 105, a sensor output value capable of identifying the surface touch, the one-point touch, the two-point touch, etc. as described with reference to Figs. 3(a), (b1), and (b2), for example.

The external microphone 102a corresponds to the external microphone 11 previously described with reference to the external view of Fig. 2(a). The external microphones 102a are provided on the external surfaces of the left and right LR speakers of the headphones 10, respectively. That is, an external microphone (L) is mounted on the external surface on the left speaker side, and an external microphone (R) is mounted on the external surface on the right speaker side.

The internal microphone 102b corresponds to the internal microphone 15 previously described with reference to the internal view of Fig. 2(c). The internal microphones 102b are provided on the internal surfaces of the left and right LR speakers of the headphones 10, respectively. That is, an internal microphone (L) is mounted on the internal surface on the left speaker side, and an internal microphone (R) is mounted on the internal surface on the right speaker side.

The mouth microphone 102c corresponds to the mouth microphone 12 previously described with reference to the external view of Fig. 2(a) and the side view of Fig. 2(b). It is only sufficient that the mouth microphone 12 is provided on either the left speaker L or right speaker R of the headphones 10. Alternatively, the mouth microphone 12 may be provided on both the left speaker L and the right speaker R of the headphones 10.

The operation unit 103 corresponds to the operation unit 13 previously described with reference to the side view of Fig. 2(b). The operation unit 103 is used in a case where the user performs various operations such as start, stop, skip, volume adjustment, and mute of the reproduced music, for example.

The communication unit 104 executes, for example, communication with the reproduction device 20, receives reproduction data by the reproduction device 20, and outputs the received data to the speaker 106 via the mode control unit 105.

Further, the communication unit 104 also receives user operation information for the reproduction device 20 and outputs the user operation information to the mode control unit 105.

The mode control unit 105 receives various kinds of information from each component, performs mode setting and mode shift, and controls the output to the speaker 106.

Each of the following information pieces is input to the mode control unit 105.
(1) Sensor detection information from touch sensor array 101
(2) Microphone acquisition sound information from microphones (external microphone 102a, internal microphone 102b, mouth microphone 102c)
(3) User operation information from operation unit 103
(4) Reproduction sound information via communication unit 104, and further, user operation information for reproduction device 20

As described above, the mode control unit 105 receives various kinds of information from each component, performs mode setting and mode shift, and controls the output to the speaker 106.

The speaker 106 executes sound output according to the mode set by the mode control unit 105. The output sound is, for example, one of the following sounds.
(1) Reproduced sound reproduced by the reproduction device 20
(2) Mixed sound of the above reproduced sound and the external sound (ambient sound) acquired by the microphones (external microphone 102a, internal microphone 102b, mouth microphone 102c)
(3) External sound acquired by the microphones (external microphone 102a, internal microphone 102b, mouth microphone 102c)

The output sound is any one of (1) to (3) mentioned above.

### [4. Processing sequence executed by mode control unit of headphones]

Next, a processing sequence executed by the mode control unit 105 of the headphones will be described.

The mode control unit 105 of the headphones 10 at the time of start executes control of the mode shift of each step (S11 to S32) described above with reference to Fig. 4.

In the following, the following two typical processing examples during the mode shifts will be described with reference to the flowchart.

(Processing example 1) Processing example of shifting to the conversation mode by detecting utterance of the user during the normal mode

(Processing example 2) Processing example in a case where, in the normal mode, the sensor detection information from the touch sensor array is received and the mode shift is performed

### [4-1. (Processing example 1) Processing example of shifting to conversation mode by detecting utterance of user during normal mode]

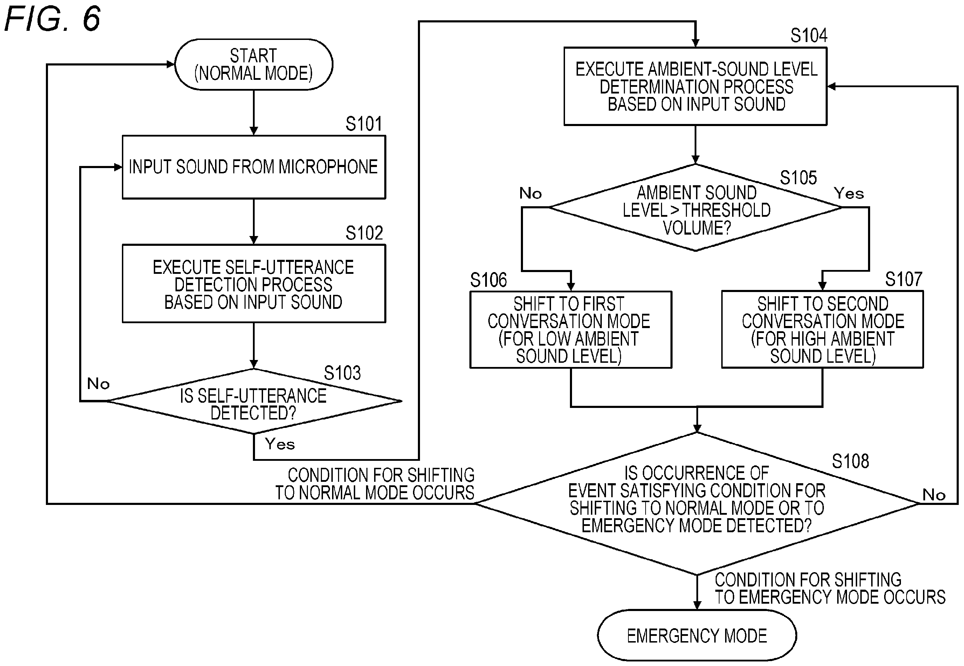

First, a processing sequence of (Processing example 1) of shifting to the conversation mode by detecting utterance of the user during the normal mode will be described with reference to the flowchart shown in Fig. 6.

Fig. 6 is a flowchart for describing the processing sequence executed by the mode control unit 105 of the headphones.

Note that the processing according to the flow described below can be executed in accordance with, for example, a program stored in a storage unit of the headphones 10 under, for example, the control of a control unit having a program execution function such as a CPU. The process of each step of the flowchart shown in Fig. 6 will be sequentially described.

### (Step S101)

First, the mode control unit 105 of the headphones receives the sound information acquired by the microphone (external microphone, mouth microphone, internal microphone) in step S101.

### (Step S102)

Next, in step S102, the mode control unit 105 of the headphones executes a self-utterance detection process based on the input sound.

As described previously, the mode control unit 105 of the headphones analyzes the sounds acquired by the plurality of microphones (external microphone, mouth microphone, internal microphone) to identify the sound source position. In a case where the sound source position is the mouth of the user wearing the headphones, it is determined that the user has spoken.

### (Step S103)

Next, the mode control unit 105 of the headphones determines in step S103 whether or not the user wearing the headphones has spoken, and when it is determined that the user has spoken, the processing proceeds to step S104.

When it is determined that the user has not spoken, the processing returns to the start, and the normal mode continues.

### (Steps S104 and S105)

When it is determined in step S103 that the user wearing the headphones has spoken, the processes of steps S104 and S105 are executed.

In steps S104 and S105, the mode control unit 105 of the headphones analyzes the sounds acquired by the plurality of microphones (external microphone, mouth microphone, internal microphone) to determine the level of the external sound (ambient sound).

Specifically, it is determined whether the level of the external sound (ambient sound) exceeds or is not more than a preset threshold volume (for example, 80 dbA).

When the level of the external sound (ambient sound) exceeds the preset threshold volume (for example, 80 dbA), the processing proceeds to step S107, and when the level of the external sound (ambient sound) is equal to or lower than the preset threshold volume (for example, 80 dbA), the processing proceeds to step S106.

### (Step S106)

When it is determined in step S105 that the level of the external sound (ambient sound) is equal to or lower than the preset threshold volume (for example, 80 dbA), the process of step S106 is executed.

In step S106, the mode control unit 105 of the headphones executes the process of shifting to the first conversation mode (for low ambient sound level).

As described above, the first conversation mode (for low ambient sound level) is a mode which is set when the ambient sound level is not more than the threshold value (for example, 80 dBA) and the environment is relatively quiet.

In the first conversation mode (for low ambient sound level), the mode control unit 105 of the headphones outputs the sound reproduced by the reproduction device 20 and the external sound (ambient sound) together through the speaker.

As described above, there are two types of external sound output modes in the "first conversation mode (for low ambient sound level)": ambient sound mode-normal (ASM normal) mode, and voice mode.

In the ASM normal mode, sounds acquired by the plurality of microphones (external microphone, mouth microphone, internal microphone) mounted to the headphones 10 are output without change through the speaker.

In the voice mode, signal processing for extracting and emphasizing a sound signal near the frequency of a human voice from the sounds acquired by the microphones (external microphone, mouth microphone, internal microphone) is executed, and the processed signal is output through the speaker.

Which mode is used for outputting external sound can be set by the user in advance, and can be changed as required.

### (Step S107)

On the other hand, when it is determined in step S105 that the level of the external sound (ambient sound) exceeds the preset threshold volume (for example, 80 dbA), the process of step S107 is executed.

In step S107, the mode control unit 105 of the headphones executes the process of shifting to the second conversation mode (for high ambient sound level).

As described above, the second conversation mode (for high ambient sound level) is a mode which is set when the ambient sound level exceeds the threshold value (for example, 80 dBA) and the environment is relatively noisy.

In the second conversation mode (for high ambient sound level), the mode control unit 105 of the headphones outputs the sound reproduced by the reproduction device 20 and the external sound (ambient sound) together through the speaker.

As mentioned above, there are three types of external sound output modes in the "second conversation mode (for high ambient sound level)": a voice mode, a beamforming mode, and a voice + beamforming mode.

In the voice mode, signal processing for extracting and emphasizing a sound signal near the frequency of a human voice from the sounds acquired by the microphones (external microphone, mouth microphone, internal microphone) is executed, and the processed signal is output through the speaker.

In the beamforming mode, signal processing for selecting and emphasizing the sound from front of the user wearing the headphones is executed, and the processed signal is output through the speaker.

In the voice + beamforming mode, both the signal processing in the voice mode and the signal processing in the beamforming mode are executed, and the processed signal is output through the speaker.

Which mode is used for outputting external sound can be set by the user in advance, and can be changed as required.

### (Step S108)

After the shift to the first conversation mode (for low ambient sound level) or the second conversation mode (for high ambient sound level) in step S106 or step S107, the mode control unit 105 executes the process of step S108.

In step S108, the mode control unit 105 determines whether or not an occurrence of an event that satisfies the condition for shifting from the conversation mode, which is the current mode, to the normal mode, or the condition for shifting from the conversation mode, which is the current mode, to the emergency mode is detected.

When it is determined in step S108 that the occurrence of an event satisfying the condition for shifting from the conversation mode which is the current mode to the normal mode is detected, the mode control unit shifts to the initial state, that is, the normal mode upon the start.

In addition, when it is determined in step S108 that the occurrence of an event satisfying the condition for shifting from the conversation mode which is the current mode to the emergency mode is detected, the processing proceeds to step S109 where the mode control unit shifts to the emergency mode.

On the other hand, when the occurrence of an event satisfying the condition for shifting to the normal mode or the condition for shifting to the emergency mode is not detected in step S108, the processing returns to step S104, and the processes of step S104 and the subsequent steps are repeated.

Note that the event that satisfies the condition for shifting from the conversation mode to the normal mode is the event in step S22 described above with reference to Fig. 4, and it is any of the following events.
(1) Detection of end of self-utterance
(2) Two-point touch
(3) User's operation such as reproduction start

When detecting any of the above events (1) to (3), the mode control unit 105 shifts to the initial state, that is, the normal mode upon the start.

Further, the event satisfying the condition for shifting from the conversation mode to the emergency mode is the event of step S32 described above with reference to Fig. 4, and it is the following event.
(1) Detection of surface touch by user

When detecting, on the basis of the analysis of output of the touch sensor array 101, that the user touches almost the entire external surface of the headphones while the conversation mode is set, the mode control unit 105 executes the process of shifting from (b) conversation mode to (c) emergency mode.

### [4-2. (Processing example 2) Processing example in a case where, in normal mode, sensor detection information from touch sensor array is received and mode shift is performed]

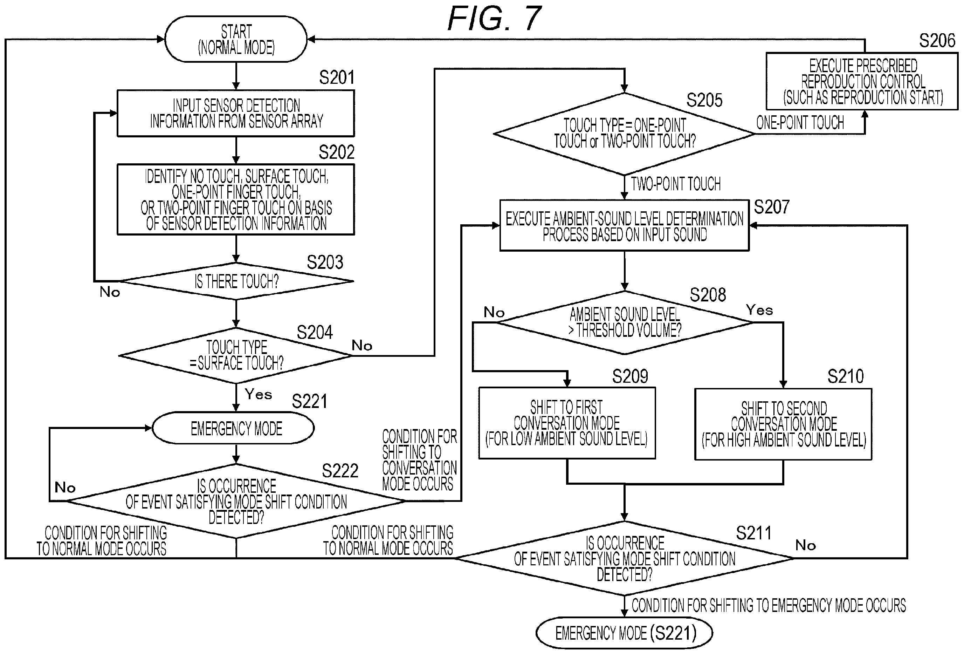

Next, (Processing example 2) which is a processing example in a case where, in the normal mode, the sensor detection information from the touch sensor array is received and the mode shift is performed will be described with reference to the flowchart in Fig. 7.

The process of each step of the flowchart shown in Fig. 7 will be sequentially described.

### (Step S201)

First, the mode control unit 105 of the headphones receives the sensor detection information from the touch sensor array 101 in step S201.

As previously described with reference to Fig. 3, the touch sensor array 101 has an array of a large number of small touch sensors, and each touch sensor outputs a detection value individually. That is, it is detected that the user touches the external surface of the headphones, and further, it is possible to identify the way the user touches the external surface of the headphones by his/her hand by analyzing the outputs of a large number of touch sensors constituting the touch sensor array 101.

For example, a sensor output value capable of identifying the surface touch, the one-point touch, the two-point touch, etc. as described with reference to Figs. 3(a), (b1), and (b2) is input to the mode control unit 105.

### (Step S202)

Next, in step S202, the mode control unit 105 identifies which one of the events among no touch, surface touch, one-point touch, and two-point touch has occurred on the basis of the sensor detection information.

### (Step S203)

First, in step S203, the mode control unit 105 identifies whether there is no touch or there is a touch (surface touch, one-point touch, or two-point touch) on the basis of the sensor detection information.

When the identification result indicating that there is no touch is obtained, the processing returns to step S201, and the input of sensor detection information is continued.

On the other hand, when the identification result indicating that there is a touch is obtained, the processing proceeds to step S204.

### (Step S204)

When the identification result indicating that there is a touch is obtained in step S203, the mode control unit 105 determines in step S204 whether or not the type of the touch is surface touch.

When the type of the touch is determined to be surface touch, the processing proceeds to step S221.

On the other hand, when the type of the touch is determined to be other than surface touch, the processing proceeds to step S205.

### (Step S205)

When the type of the touch is determined to be other than surface touch in step S204, the processing proceeds to step S205.

In step S205, the mode control unit 105 determines whether the type of the touch is one-point touch or two-point touch.

When the type of the touch is determined to be one-point touch, the processing proceeds to step S206.

On the other hand, when the type of the touch is determined to be two-point touch, the processing proceeds to step S207.

### (Step S206)

When the type of the touch is determined to be one-point touch, the processing proceeds to step S206 where the reproduction control associated in advance with the one-point touch is executed.

As described previously with reference to Fig. 4, in the normal mode, the one-point touch can be used as an instruction to start reproduction or perform skipping operation, and in step S106, the reproduction control process associated with the one-point touch is performed.

### (Step S207)

On the other hand, when the type of the touch is determined to be two-point touch in step S205, the processing proceeds to step S207.

As described previously with reference to Fig. 4, the two-point touch is an event that satisfies the condition for shifting to the conversation mode.

In this case, the mode control unit 105 of the headphones analyzes the sounds acquired by the plurality of microphones (external microphone, mouth microphone, internal microphone) to determine the level of the external sound (ambient sound).

Specifically, it is determined whether the level of the external sound (ambient sound) exceeds or is not more than a preset threshold volume (for example, 80 dbA).

### (Step S208)

Step S208 is a decision step. When the level of the external sound (ambient sound) analyzed in step S207 exceeds the preset threshold volume (for example, 80 dbA), the processing proceeds to step S210, and when the level of the external sound (ambient sound) is equal to or lower than the preset threshold volume (for example, 80 dbA), the processing proceeds to step S209.

### (Step S209)

When the level of the external sound (ambient sound) is determined to be equal to or lower than the preset threshold volume (for example, 80 dbA) in step S208, the process of step S209 is executed.

In step S209, the mode control unit 105 of the headphones executes the process of shifting to the first conversation mode (for low ambient sound level).

As described above, the first conversation mode (for low ambient sound level) is a mode which is set when the ambient sound level is not more than the threshold value (for example, 80 dBA) and the environment is relatively quiet.

In the first conversation mode (for low ambient sound level), the mode control unit 105 of the headphones outputs the sound reproduced by the reproduction device 20 and the external sound (ambient sound) together through the speaker.

As described above, there are two types of external sound output modes in the "first conversation mode (for low ambient sound level)": ambient sound mode-normal (ASM normal) mode, and voice mode.

In the ASM normal mode, sounds acquired by the plurality of microphones (external microphone, mouth microphone, internal microphone) mounted to the headphones 10 are output without change through the speaker.

In the voice mode, signal processing for extracting and emphasizing a sound signal near the frequency of a human voice from the sounds acquired by the microphones (external microphone, mouth microphone, internal microphone) is executed, and the processed signal is output through the speaker.

Which mode is used for outputting external sound can be set by the user in advance, and can be changed as required.

### (Step S210)

On the other hand, when the level of the external sound (ambient sound) is determined to exceed the preset threshold volume (for example, 80 dbA) in step S208, the process of step S210 is executed.

In step S210, the mode control unit 105 of the headphones executes the process of shifting to the second conversation mode (for high ambient sound level).

As described above, the second conversation mode (for high ambient sound level) is a mode which is set when the ambient sound level exceeds the threshold value (for example, 80 dBA) and the environment is relatively noisy.

In the second conversation mode (for high ambient sound level), the mode control unit 105 of the headphones outputs the sound reproduced by the reproduction device 20 and the external sound (ambient sound) together through the speaker.

As mentioned above, there are three types of external sound output modes in the "second conversation mode (for high ambient sound level)": a voice mode, a beamforming mode, and a voice + beamforming mode.

In the voice mode, signal processing for extracting and emphasizing a sound signal near the frequency of a human voice from the sounds acquired by the microphones (external microphone, mouth microphone, internal microphone) is executed, and the processed signal is output through the speaker.

In the beamforming mode, signal processing for selecting and emphasizing the sound from front of the user wearing the headphones is executed, and the processed signal is output through the speaker.

In the voice + beamforming mode, both the signal processing in the voice mode and the signal processing in the beamforming mode are executed, and the processed signal is output through the speaker.

Which mode is used for outputting external sound can be set by the user in advance, and can be changed as required.

### (Step S211)

After the shift to the first conversation mode (for low ambient sound level) or the second conversation mode (for high ambient sound level) in step S209 or step S210, the mode control unit 105 executes the process of step S211.

In step S211, the mode control unit 105 determines whether or not an occurrence of an event that satisfies the condition for shifting from the conversation mode, which is the current mode, to the normal mode, or the condition for shifting from the conversation mode, which is the current mode, to the emergency mode is detected.

When it is determined in step S211 that the occurrence of an event satisfying the condition for shifting from the conversation mode which is the current mode to the normal mode is detected, the mode control unit shifts to the initial state, that is, the normal mode upon the start.

In addition, when it is determined in step S211 that the occurrence of an event satisfying the condition for shifting from the conversation mode which is the current mode to the emergency mode is detected, the mode control unit shifts to the emergency mode. The emergency mode is the same as the emergency mode indicated in step S221 which is set in a case where a surface touch is detected in the determination of step S204 in the flowchart, and after the shift to the emergency mode, the process of step S222 is executed.

Note that, when the occurrence of an event satisfying the condition for shifting to the normal mode or the condition for shifting to the emergency mode is not detected in step S211, the processing returns to step S207, and the processes of step S207 and the subsequent steps are repeated.

Note that the event that satisfies the condition for shifting from the conversation mode to the normal mode is the event in step S22 described above with reference to Fig. 4, and it is any of the following events.
(1) Detection of end of self-utterance
(2) Two-point touch
(3) User's operation such as reproduction start

When detecting any of the above events (1) to (3), the mode control unit 105 shifts to the initial state, that is, the normal mode upon the start.

Further, the event satisfying the condition for shifting from the conversation mode to the emergency mode is the event of step S32 described above with reference to Fig. 4, and it is the following event.
(1) Detection of surface touch by user

When detecting, on the basis of the analysis of output of the touch sensor array 101, that the user touches almost the entire external surface of the headphones while the conversation mode is set, the mode control unit 105 executes the process of shifting from (b) conversation mode to (c) emergency mode.

### (Steps S221 and S222)

Finally, the processes of steps S221 and S222, which are the processes after the shift to the emergency mode, will be described.

When determining in step S204 that the type of the touch is surface touch, the mode control unit 105 executes a mode shift process for shifting to the emergency mode from the normal mode in step S205.

Further, when detecting in step S211 the event satisfying the condition for shifting to the emergency mode from the conversation mode, that is, (1) detection of surface touch by the user, the mode control unit 105 executes the mode shift process for shifting to the emergency mode from the conversation mode in step S211.

After the mode shift to the emergency mode in step S221, the process of step S222 is executed.

In step S222, it is determined whether or not an event that satisfies the condition for shifting from the emergency mode, which is the current mode, to another mode (normal mode, conversation mode) has occurred.

When it is determined in step S222 that the occurrence of an event satisfying the condition for shifting from the emergency mode to the normal mode is detected, the mode control unit shifts to an initial state, that is, the normal mode upon the start.

In addition, when it is determined in step S222 that the occurrence of an event satisfying the condition for shifting from the emergency mode to the conversation mode is detected, the processing proceeds to step S207.

In addition, when it is determined in step S222 that the occurrence of an event satisfying the condition for shifting from the emergency mode which is the current mode to another mode (normal mode, conversation mode) is not detected, the processing returns to step S221, and the emergency mode continues.

Note that the event that satisfies the condition for shifting from the emergency mode to the normal mode is the event in step S12 described above with reference to Fig. 4, and it is the following event.
(1) Detection of release of surface touch by user

When detecting, on the basis of the analysis of output of the touch sensor array 101, that the user releases the surface touch on the external surface of the headphones while the emergency mode is set, the mode control unit 105 executes the process of shifting to (a) normal mode from (c) emergency mode.

Further, the event satisfying the condition for shifting from the emergency mode to the conversation mode is the events of step S31 described above with reference to Fig. 4, and it is any of the following events.
(1) Detection of self-utterance
(2) Two-point touch

When the mode control unit 105 detects either event (1) or (2), the processing proceeds to step S207. That is, the mode control unit shifts to the conversation mode.

### [5. Summary of mode shift executed by mode control unit]

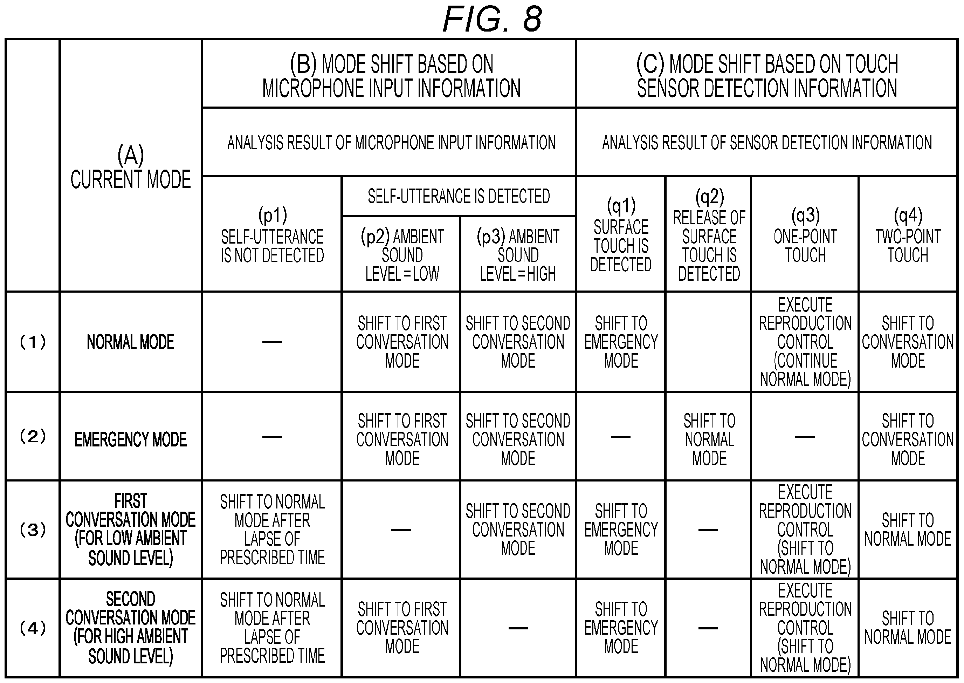

Next, the summary of the mode shift process executed by the mode control unit 105 of the headphones 10 according to the present disclosure will be described with reference to Fig. 8.

Fig. 8 is a diagram showing a table summarizing (A) current mode of the headphones 10 according to the present disclosure and mode shift based on events occurring in each current mode. Specifically, Fig. 8 shows, as a list, correspondence data of:
(A) Current mode,
(B) Mode shift based on microphone input information, and
(C) Mode shift based on touch sensor detection information.

(A) Current mode indicates the following four modes.
   (1) Normal mode
   (2) Emergency mode
   (3) First conversation mode (for low ambient sound level)
   (4) Second conversation mode (for high ambient sound level)

Hereinbelow, (B) mode shift based on the microphone input information and (C) mode shift based on the touch sensor detection information in a case where the current mode is each of (1) to (4) mentioned above will be described.

### [5-1. Mode shift in a case where current mode is normal mode]

First, the mode shift in a case where the current mode is the normal mode will be described.

In a case where the current mode is the normal mode, the mode control unit 105 executes "(B) mode shift based on the microphone input information" as follows.
(p1) In a case where self-utterance is not detected = No processing (normal mode continues)
(p2) In a case where self-utterance is detected, and the level of the ambient sound is equal to or lower than the threshold value (for example, 80 dBA) = Shift to first conversation mode (for low ambient sound level)
(p3) In a case where self-utterance is detected, and the level of the ambient sound exceeds the threshold value (for example, 80 dBA) = Shift to second conversation mode (for high ambient sound level)

Further, in a case where the current mode is the normal mode, the mode control unit 105 executes "(C) mode shift based on the touch sensor detection information" as follows.
(q1) In a case where surface touch is detected = Shift to emergency mode
(q2) In a case where release of surface touch is detected = No processing (normal mode continues)
(q3) In a case where one-point touch is detected = Execute prescribed reproduction control (reproduction start, etc.) (normal mode continues)
(q4) In a case where two-point touch is detected = Shift to conversation mode

Note that, during (q4) shift to the conversation mode described above, a process for shifting to different conversation modes is performed according to the ambient sound level. In a case where the ambient sound level is not more than the threshold value (for example, 80 dBA), the mode control unit shifts to the first conversation mode (for low ambient sound level), and in a case where the ambient sound level exceeds the threshold value (for example, 80 dBA), the mode control unit shifts to the second conversation mode (for high ambient sound level).

### [5-2. Mode shift in a case where current mode is emergency mode]

Next, the mode shift in a case where the current mode is the emergency mode will be described.

In a case where the current mode is the emergency mode, the mode control unit 105 executes "(B) mode shift based on the microphone input information" as follows.
(p1) In a case where self-utterance is not detected = No processing (emergency mode continues)
(p2) In a case where self-utterance is detected, and the level of the ambient sound is equal to or lower than the threshold value (for example, 80 dBA) = Shift to first conversation mode (for low ambient sound level)
(p3) In a case where self-utterance is detected, and the level of the ambient sound exceeds the threshold value (for example, 80 dBA) = Shift to second conversation mode (for high ambient sound level)

Further, in a case where the current mode is the emergency mode, the mode control unit 105 executes "(C) mode shift based on the touch sensor detection information" as follows.
(q1) In a case where surface touch is detected = No processing (emergency mode continues)
(q2) In a case where release of surface touch is detected = Shift to normal mode
(q3) In a case where one-point touch is detected = No processing (emergency mode continues)
(q4) In a case where two-point touch is detected = Shift to conversation mode

Note that, during (q4) shift to the conversation mode described above, a process for shifting to different conversation modes is performed according to the ambient sound level. In a case where the ambient sound level is not more than the threshold value (for example, 80 dBA), the mode control unit shifts to the first conversation mode (for low ambient sound level), and in a case where the ambient sound level exceeds the threshold value (for example, 80 dBA), the mode control unit shifts to the second conversation mode (for high ambient sound level).

### [5-3. Mode shift in a case where current mode is first conversation mode (for low ambient sound level)]

Next, the mode shift in a case where the current mode is the first conversation mode (for low ambient sound level) will be described.

In a case where the current mode is the first conversation mode (for low ambient sound level), the mode control unit 105 executes "(B) mode shift based on the microphone input information" as follows.
(p1) In a case where self-utterance is not detected = Shift to normal mode in a case where utterance of user is not detected for preset threshold time (for example, 30 seconds) or more
(p2) In a case where self-utterance is detected, and the level of the ambient sound is equal to or lower than the threshold value (for example, 80 dBA) = No processing (first conversation mode (for low ambient sound level) continues)
(p3) In a case where self-utterance is detected, and the level of the ambient sound exceeds the threshold value (for example, 80 dBA) = Shift to second conversation mode (for high ambient sound level)

Further, in a case where the current mode is the first conversation mode (for low ambient sound level), the mode control unit 105 executes "(C) mode shift based on the touch sensor detection information" as follows.
(q1) In a case where surface touch is detected = Shift to emergency mode
(q2) In a case where release of surface touch is detected = No processing (first conversation mode (for low ambient sound level) continues)
(q3) In a case where one-point touch is detected = Execute prescribed reproduction control (shift to normal mode)
(q4) In a case where two-point touch is detected = Shift to normal mode

### [5-4. Mode shift in a case where current mode is second conversation mode (for high ambient sound level)]

Next, the mode shift in a case where the current mode is the second conversation mode (for high ambient sound level) will be described.

In a case where the current mode is the second conversation mode (for high ambient sound level), the mode control unit 105 executes "(B) mode shift based on the microphone input information" as follows.
(p1) In a case where self-utterance is not detected = Shift to normal mode in a case where utterance of user is not detected for preset threshold time (for example, 30 seconds) or more
(p2) In a case where self-utterance is detected, and the level of the ambient sound is equal to or lower than the threshold value (for example, 80 dBA) = Shift to first conversation mode (for low ambient sound level)
(p3) In a case where self-utterance is detected, and the level of the ambient sound exceeds the threshold value (for example, 80 dBA) = No processing (second conversation mode (for high ambient sound level) continues)

Further, in a case where the current mode is the second conversation mode (for high ambient sound level), the mode control unit 105 executes "(C) mode shift based on the touch sensor detection information" as follows.
(q1) In a case where surface touch is detected = Shift to emergency mode
(q2) In a case where release of surface touch is detected = No processing (second conversation mode (for high ambient sound level) continues)
(q3) In a case where one-point touch is detected = Execute prescribed reproduction control (shift to normal mode)
(q4) In a case where two-point touch is detected = Shift to normal mode

The mode shift process executed by the mode control unit 105 of the headphones 10 according to the present disclosure can be summarized as shown in Fig. 8.

Note that this mode shift process example is one example, and other settings are possible.

For example, although, in the mode shift process example shown in Fig. 8, the sensor detection value from the touch sensor array 101 is identified as one-point touch or two-point touch, and one-point touch is used for reproduction control in the normal mode, such reproduction control may not be provided. Specifically, in a case where a touch on a partial area, which may be either one-point touch or two-point touch, other than surface touch is detected, the shift to the conversation mode or the shift to the normal mode from the conversation mode may be performed.

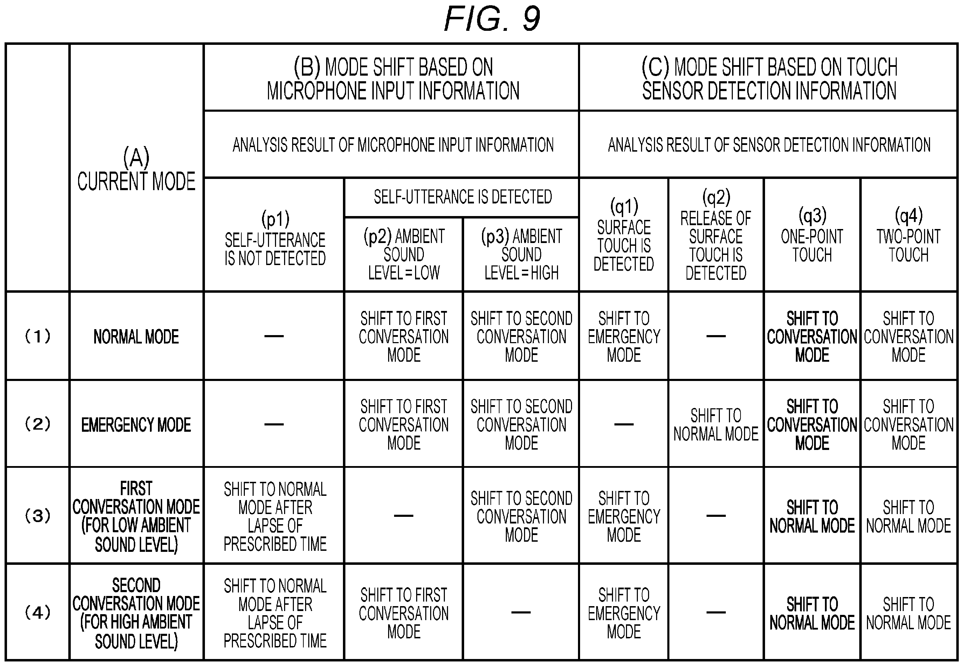

Fig. 9 shows an example of mode shift set as described above.

In the mode shift data shown in Fig. 9, the mode shift when (q3) one-point touch is detected has the same setting as the mode shift when (q4) two-point touch is detected.

In this way, in a case where one-point touch is detected, the mode shift similar to that for the two-point touch may also be executed.

Further, the process similar to that for the two-point touch may also be executed for touch on more than two points, such as three-point touch.

Alternatively, each of one-point touch, two-point touch, three-point touch, and the like may be identified, and a mode shift different for each touch may be executed.

### [6. Configuration example of hardware of headphones]

Next, a configuration example of hardware of the headphones described in the above embodiment will be described.

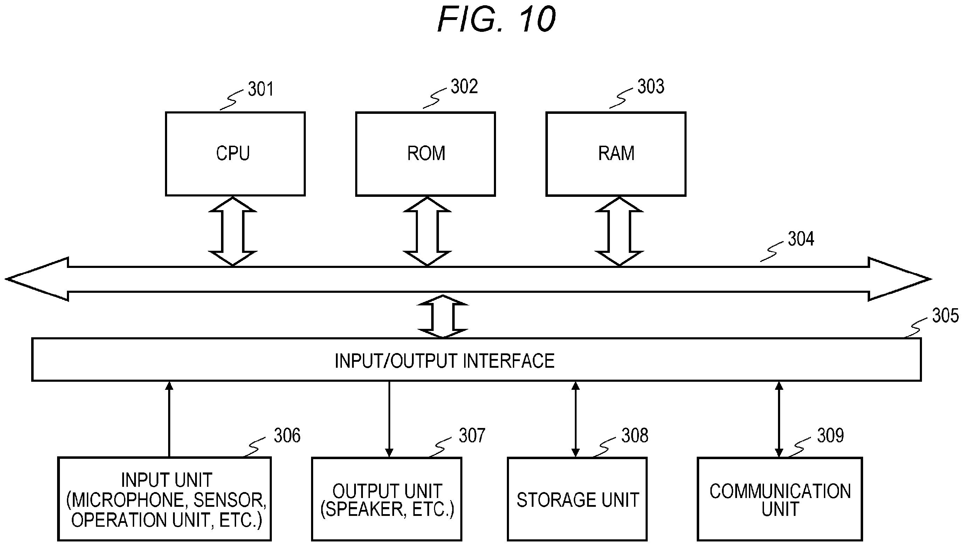

The hardware shown in Fig. 10 is an example of the configuration of hardware of the headphones described in the above embodiment.

A central processing unit (CPU) 301 functions as a control unit or a data processing unit that executes various kinds of processing according to a program stored in a read only memory (ROM) 302 or a storage unit 308. For example, the CPU 301 executes the processing according to the sequence described in the above embodiment.

Specifically, the processing of the mode control unit 105 described above, etc. is executed.

A random access memory (RAM) 303 stores programs executed by the CPU 301, data, and the like. The CPU 301, the ROM 302, and the RAM 303 are interconnected by a bus 304.

The CPU 301 is connected to an input/output interface 305 via the bus 304. The input/output interface 305 is connected to an input unit 306 including microphones, sensors, operation unit, and the like, and an output unit 307 including speakers, and the like. The CPU 301 executes various kinds of processing in response to input information input from the input unit 306, and outputs a processing result to the output unit 307.

Specifically, the CPU 301 outputs output sound depending on the mode shift to the speaker.

The storage unit 308 connected to the input/output interface 305 stores a program executed by the CPU 301 and various kinds of data. The communication unit 309 functions as a transmission/reception unit for Wi-Fi communication, Bluetooth (registered trademark) (BT) communication, and other data communication via a network such as the Internet or a local area network, and communicates with an external device.

### [7. Summary of configuration of present disclosure]

The embodiment of the present disclosure has been described above in detail with reference to the specific embodiment. However, it is obvious that those skilled in the art can modify or substitute the embodiment without departing from the scope of the present disclosure. That is, the present invention has been disclosed in the form of illustrative modes, and should not be construed as restrictive. In order to determine the gist of the present disclosure, the scope of claims should be taken into consideration.

Note that the technology described in the present specification can be configured as follows.
(1) A headphone including:
   a microphone that captures an external sound which is an ambient sound around the headphone; and
   a mode control unit that controls an output sound of a speaker of the headphone according to a mode,
   in which the mode control unit executes mode control for shifting to a conversation mode in which the external sound captured by the microphone is output from the speaker, when detecting utterance of a user wearing the headphone by analysis of an input sound of the microphone.

### (2) The headphone according to (1), further including

a touch sensor array capable of identifying a type of a touch operation on an external surface of the headphone,
in which the mode control unit executes the mode control for shifting to the conversation mode, when detecting a touch operation of a prescribed touch type by analysis of an output of the touch sensor array.

(3) The headphone according to (2), in which the touch operation of the prescribed touch type is a two-point touch or a one-point touch on the external surface of the headphone.

(4) The headphone according to any one of (1) to (3),
in which the mode control unit determines, by analysis of an input sound of the microphone, whether or not a level of the external sound exceeds a prescribed level, and executes different controls according to the determination result.

(5) The headphone according to (4),
in which the mode control unit executes mode control for setting either a following mode (a) or a following mode (b), when determining that the level of the external sound is equal to or less than the prescribed level by the analysis of the input sound of the microphone:
(a) ambient sound mode-normal (ASM normal) mode in which the sound acquired by the microphone is output to the speaker
(b) voice mode in which a processed signal obtained by extracting and emphasizing a sound signal near a frequency of a human voice from the sound acquired by the microphone is output to the speaker.

(6) The headphone according to (4) or (5),
in which the mode control unit executes mode control for setting either a following mode (a) or a following mode (b), or a mode in which the mode (a) and the mode (b) are mixed, when determining that the level of the external sound exceeds the prescribed level by the analysis of the input sound of the microphone:
(a) voice mode in which a processed signal obtained by extracting and emphasizing a sound signal near a frequency of a human voice from the sound acquired by the microphone is output
(b) beamforming mode in which a processed signal obtained by selecting and emphasizing a sound from front of the user wearing the headphone is output to the speaker.

(7) The headphone according to any one of (1) to (6), in which the microphone includes a plurality of microphones set at different positions of the headphone.

(8) The headphone according to (7), in which the plurality of microphones includes a mouth microphone located near the mouth of the user wearing the headphone.

(8), (9) The headphone according to any one of (1) to
in which the mode control unit performs a mode switching process for switching between
the conversation mode in which the external sound acquired by the microphone is output from the speaker and
a normal mode in which the external sound acquired by the microphone is not output from the speaker or in which an external sound of a low level is output, and
the mode control unit executes the mode control for shifting to the conversation mode, when detecting utterance of the user wearing the headphone by analysis of an input sound of the microphone while the normal mode is set.

(10) The headphone according to (9),
in which the mode control unit executes mode control for shifting to the normal mode, when the utterance of the user wearing the headphone is not detected for a prescribed time while the conversation mode is set.

(11) The headphone according to any one of (1) to (10), further including
a touch sensor array capable of identifying a type of a touch operation on an external surface of the headphone,
in which the mode control unit executes mode control for shifting to an emergency mode in which the external sound acquired by the microphone is output from the speaker, when detecting a touch operation of a prescribed touch type by analysis of an output of the touch sensor array.

(12) The headphone according to (11), in which the touch operation of the prescribed touch type is a surface touch on the external surface of the headphone.

(13) The headphone according to (11) or (12),
in which the mode control unit executes the mode control for shifting to the conversation mode, when detecting utterance of the user wearing the headphone by the analysis of the input sound of the microphone while the emergency mode is set.

(14) An acoustic signal processing method for executing control of a speaker output sound of a headphone,
the headphone including:
a microphone that captures an external sound which is an ambient sound around the headphone; and
a mode control unit that controls an output sound of a speaker of the headphone according to a mode,
in which the mode control unit executes mode control for shifting to a conversation mode in which the external sound captured by the microphone is output from the speaker, when detecting utterance of a user wearing the headphone by analysis of an input sound of the microphone.

(15) A program that causes a headphone to execute control of a speaker output sound,
the headphone including:
a microphone that captures an external sound which is an ambient sound around the headphone; and
a mode control unit that controls an output sound of a speaker of the headphone according to a mode,
the program causing the mode control unit to execute mode control for shifting to a conversation mode in which the external sound captured by the microphone is output from the speaker, when the mode control unit detects utterance of a user wearing the headphone by analysis of an input sound of the microphone.

Further, a series of processing described in the specification can be executed by hardware, software, or a configuration obtained by combining hardware and software. When the processing is performed by software, a program having a processing sequence recorded therein can be executed by being installed in a memory built in dedicated hardware in a computer, or by being installed in a general-purpose computer capable of executing various kinds of processing. For example, the program can be recorded in a recording medium in advance. The program can be installed in the computer from the recording medium, or the program can be received through a network such as a local area network (LAN) or the Internet to be installed in the recording medium such as a built-in hard disk.

It is to be noted that the various kinds of processing described in the specification are not necessarily performed sequentially in the orders described in the specification, and may be performed simultaneously or individually according to the processing capacity of a device that executes the processing or as necessary. Further, the system in the present specification refers to a logical set of multiple devices, and the respective devices are not limited to be housed within a single housing.

### INDUSTRIAL APPLICABILITY

As described above, according to the configuration of one embodiment of the present disclosure, a headphone capable of mode control for shifting to a conversation mode in which an external sound is output from a speaker without a need to perform troublesome user operation is implemented.

Specifically, for example, the headphone includes: a microphone that captures an external sound which is an ambient sound around the headphone; and a mode control unit that controls an output sound of a speaker of the headphone according to a mode. The mode control unit shifts to a conversation mode in which the external sound is output from the speaker, when detecting utterance of a user wearing the headphone by analysis of an input sound of the microphone. Further, the mode control unit also shifts to the conversation mode, when detecting a touch operation of a prescribed touch type by analysis of an output of a touch sensor array that is capable of identifying the type of a touch operation on an external surface of the headphone.

With this configuration, a headphone that enables mode control for shifting to the conversation mode in which an external sound is output from a speaker without a need to perform troublesome user operation is achieved.

### REFERENCE SIGNS LIST

- 1: User
- 10: Headphones
- 11: External microphone
- 12: Mouth microphone
- 13: Operation unit
- 14: Speaker
- 15: Internal microphone
- 20: Reproduction device (user terminal)
- 101: Touch sensor array
- 102a: External microphone
- 102b: Internal microphone
- 102c: Mouth microphone
- 103: Operation unit
- 104: Communication unit
- 105: Mode control unit
- 106: Speaker
- 301: CPU
- 302: ROM
- 303: RAM
- 304: Bus
- 305: Input/output interface
- 306: Input unit
- 307: Output unit
- 308: Storage unit
- 309: Communication unit

## Claims

1. A headphone comprising:
a microphone that captures an external sound which is an ambient sound around the headphone; and
a mode control unit that controls an output sound of a speaker of the headphone according to a mode,
wherein the mode control unit executes mode control for shifting to a conversation mode in which the external sound captured by the microphone is output from the speaker, when detecting utterance of a user wearing the headphone by analysis of an input sound of the microphone.

2. The headphone according to claim 1, further comprising
a touch sensor array capable of identifying a type of a touch operation on an external surface of the headphone,
wherein the mode control unit executes the mode control for shifting to the conversation mode, when detecting a touch operation of a prescribed touch type by analysis of an output of the touch sensor array.

3. The headphone according to claim 2, wherein the touch operation of the prescribed touch type is a two-point touch or a one-point touch on the external surface of the headphone.

4. The headphone according to claim 1,
wherein the mode control unit determines, by analysis of an input sound of the microphone, whether or not a level of the external sound exceeds a prescribed level, and executes different controls according to the determination result.

5. The headphone according to claim 4,
wherein the mode control unit executes mode control for setting either a following mode (a) or a following mode (b), when determining that the level of the external sound is equal to or less than the prescribed level by the analysis of the input sound of the microphone:
(a) ambient sound mode-normal (ASM normal) mode in which the sound acquired by the microphone is output to the speaker
(b) voice mode in which a processed signal obtained by extracting and emphasizing a sound signal near a frequency of a human voice from the sound acquired by the microphone is output to the speaker.

6. The headphone according to claim 4,
wherein the mode control unit executes mode control for setting either a following mode (a) or a following mode (b), or a mode in which the mode (a) and the mode (b) are mixed, when determining that the level of the external sound exceeds the prescribed level by the analysis of the input sound of the microphone:
(a) voice mode in which a processed signal obtained by extracting and emphasizing a sound signal near a frequency of a human voice from the sound acquired by the microphone is output
(b) beamforming mode in which a processed signal obtained by selecting and emphasizing a sound from front of the user wearing the headphone is output to the speaker.

7. The headphone according to claim 1, wherein the microphone includes a plurality of microphones set at different positions of the headphone.

8. The headphone according to claim 7, wherein the plurality of microphones includes a mouth microphone located near the mouth of the user wearing the headphone.

9. The headphone according to claim 1,
wherein the mode control unit performs a mode switching process for switching between
the conversation mode in which the external sound acquired by the microphone is output from the speaker and
a normal mode in which the external sound acquired by the microphone is not output from the speaker or in which an external sound of a low level is output, and
the mode control unit executes the mode control for shifting to the conversation mode, when detecting utterance of the user wearing the headphone by analysis of an input sound of the microphone while the normal mode is set.

10. The headphone according to claim 9,
wherein the mode control unit executes mode control for shifting to the normal mode, when the utterance of the user wearing the headphone is not detected for a prescribed time while the conversation mode is set.

11. The headphone according to claim 1, further comprising
a touch sensor array capable of identifying a type of a touch operation on an external surface of the headphone,
wherein the mode control unit executes mode control for shifting to an emergency mode in which the external sound acquired by the microphone is output from the speaker, when detecting a touch operation of a prescribed touch type by analysis of an output of the touch sensor array.

12. The headphone according to claim 11, wherein the touch operation of the prescribed touch type is a surface touch on the external surface of the headphone.

13. The headphone according to claim 11,
wherein the mode control unit executes the mode control for shifting to the conversation mode, when detecting utterance of the user wearing the headphone by the analysis of the input sound of the microphone while the emergency mode is set.

14. An acoustic signal processing method for executing control of a speaker output sound of a headphone,
the headphone including:
a microphone that captures an external sound which is an ambient sound around the headphone; and
a mode control unit that controls an output sound of a speaker of the headphone according to a mode,
wherein the mode control unit executes mode control for shifting to a conversation mode in which the external sound captured by the microphone is output from the speaker, when detecting utterance of a user wearing the headphone by analysis of an input sound of the microphone.

15. A program that causes a headphone to execute control of a speaker output sound,
the headphone including:
a microphone that captures an external sound which is an ambient sound around the headphone; and
a mode control unit that controls an output sound of a speaker of the headphone according to a mode,
the program causing the mode control unit to execute mode control for shifting to a conversation mode in which the external sound captured by the microphone is output from the speaker, when the mode control unit detects utterance of a user wearing the headphone by analysis of an input sound of the microphone.
